# EUROPÄISCHE PATENTSCHRIFT

(11) **EP 1 529 791 B1**
(45) Veröffentlichungstag und Bekanntmachung des Hinweises auf die Patenterteilung: **21.04.2010**
(21) Anmeldenummer: 04024704.1
(22) Anmeldetag: 16.10.2004
(51) Int. Cl.: C08G 18/68, C09D 175/14, C08G 18/80

(54) **Beschichtung für Nahrungsmittelbehälter**
Coating for food container
Revêtement pour un récipient alimentaire

(30) Priorität: 24.10.2003 DE 10349811
(43) Veröffentlichungstag der Anmeldung: 11.05.2005
(73) Patentinhaber: Bayer MaterialScience AG, 51368 Leverkusen (DE)
(72) Erfinder: Thiebes, Christoph, Dr., 50670 Köln (DE); Baumbach, Beate, Dr., 51399 Burscheid (DE); Hänsel, Eduard Dr., 40764 Langenfeld (DE); Küttner, Wolfram, 51467 Bergisch Gladbach (DE); Wamprecht, Christian Dr., 41472 Neuss (DE)

(56) Entgegenhaltungen:
- EP-A- 1 498 461
- WO-A-03/066762
- JP-A- 2002 302 643
- US-A- 4 141 871

## Beschreibung

Die vorliegende Erfindung betrifft Innenbeschichtungen von metallischen Nahrungsmittelbehältern und -verpackungen. Unter "Innenbeschichtung" wird eine Beschichtung verstanden, die direkten Kontakt, insbesondere über einen längeren Zeitraum, zu dem in dem beschichteten Behälter befindlichen Nahrungs- oder Genussmittel hat.

Es ist bekannt, Einkomponenten-Polyurethan-Einbrennlacke (1K-PUR-Einbrennlacke), bestehend hauptsächlich aus einem blockierten Polyisocyanat als Vernetzerkomponente und einem Polyol als Bindemittelkomponente, als Beschichtungsmittel, z.B. für die Automobil-Erstlackierung, die allgemeine Industrielackierung und im Coil-Coating einzusetzen. Als 1K-PUR-Einbrennlacke werden solche Lacke bezeichnet, die bei erhöhten Temperaturen unter Ausbildung eines Polyurethannetzwerkes aushärten. Dabei reagieren die Hydroxylgruppen eines Polyols mit den blockierten NCO-Gruppen eines Polyisocyanates. Die Reaktion von mit CH-aciden Estern blockierten NCO-Gruppen mit Polyolen stellt dagegen eine Umesterung dar, bei der kein Polyurethannetzwerk entsteht, weshalb Lacke auf Basis solcher blockierten Polyisocyanate nicht als IK-PUR-Einbrennlacke bezeichnet werden.

Auf ein inhärentes Problem beim Einsatz von blockierten Polyisocyanaten zur Herstellung von Polyurethanbeschichtungen wird beispielsweise in "Polyurethane für Lacke und Beschichtungen", Seiten 18 bis 35 (M. Bock, Vincentz Verlag, Hannover, 1999) hingewiesen: Je nach Art des Blockierungsmittels und der Einbrennbedingungen verbleibt ein mehr oder weniger großer Teil des Blockierungsmittels in freier Form in der Beschichtung. Es wird auch ausgeführt, dass der Restgehalt an Blockierungsmittel vom jeweiligen Blockierungsmittel selbst und von dessen Reaktivität abhängt.

Bei der Herstellung von Beschichtungen von metallischen Verpackungen, dem sogenannten Can Coating, werden Bleche, z.B. aus Weißblech oder Aluminium, mit einem Einbrennlack beschichtet und diese nach Aushärtung des Lackes zu den gewünschten Gebrauchsgütern verarbeitet. Hierbei werden hohe Anforderungen an die Beschichtung gestellt, insbesondere, wenn es sich um die Innenbeschichtung von Nahrungsmittelbehältern, beispielsweise Getränkedosen, handelt. Zum einen müssen die Lacke flexibel genug sein, um Verformungen während der Herstellung der Behälter und beim Transport der fertig verpackten Güter ohne Beschädigung der Beschichtung (z. B. durch Rissbildung) zu überstehen, zum anderen muss das metallische Substrat zuverlässig vor dem Einfluss korrosiver Medien geschützt werden. Zusätzlich muss die Haftfähigkeit auf dem metallischen Substrat sowohl bei der Verformung als auch bei einer nachträglichen Sterilisierung, wie sie insbesondere bei Behältern, die als Verpackung für Nahrungsmittel und Getränke dienen, notwendig ist, gegeben sein. Es ist nicht erwünscht, dass Bestandteile der Beschichtung bei Herstellung und Lagerung der verpackten Güter in diese übergehen, da dies zur Beeinträchtigung der Produkteigenschaften führen kann.

### Zum Stand der Technik, beschrieben in "Internal Laquers of metallic food containers", K. R:

Kumar, Popular Plastics & Packaging, 8/2001, Seiten 66-70, gehört die Verwendung von Beschichtungsmitteln auf Basis von Bisphenol-A-Diglycidyl-Ether (BADGE). Es ist bekannt, dass geringe Mengen dieser in in-vitro-Tests mutagen wirksamen Substanz in die verpackten Nahrungsmittel übergehen können. Daher wäre es vorteilhaft, BADGE-freie Beschichtungsmittel für die Innenbeschichtung von Dosen mit Nahrungsmittelkontakt einzusetzen.

Der Einsatz von Polyurethan-Pulverlacken auf Basis von Polyisocyanaten und Polyolen zur Herstellung von Innenbeschichtungen von Verpackungsbehältern wird in DE-A 19 545 424 beschrieben. Es gibt nur wenig Literatur, die Polyurethanlacke auf Basis blockierter Polyisocyanate zur Beschichtung des überwiegenden Teils von Nahrungsmittelbehältern mit dauerhaftem Kontakt zum Nahrungsmittel beschreibt. Dies sind US-A-4 141 871, JP 2002 302643 A, WO 03/066762 und EP-A-1 498. Als Polyolkomponente für den Polyurethanlack werden in US-A-4 141 871 komplexe Polyetherharze auf Basis von Bisphenol-A verwendet, in JP 2002 302643 Ethergruppentragende Polyester aus aromatischen Säuren, verzweigten Polyolen und Etherpolyolen und in WO 03/066762 Cyclopentadien-modifizierte Polyester, die aus der Copoylmerisation von ungesättigten Estern mit Cyclopendadienen erhältlich sind. EP-A-1 498 461 beschreibt ein Formaldehyd-Phenol-Harz basiertes System. Dem Fachmann ist, unter anderem aus "Polyurethane für Lacke und Beschichtungen", Seiten 18 bis 35 (M. Bock, Vincentz Verlag, Hannover, 1999), bekannt ist, dass solche Beschichtungen einen Restgehalt an freiem Blockierungsmittel enthalten. Es musste daher davon ausgegangen werden, dass diese Chemikalien in das Füllgut übergehen würden und dort zu Geschmacksveränderungen oder Trübungen oder im schlimmsten Fall zur gesundheitlichen Schädigung des Konsumenten führen können. In dem o.a. Lehrbuch wird zwar darauf hingewiesen, dass mit Malonsäurediethylester blockierte Polyisocyanate für die Herstellung von Kronkorkenabdichtungen zugelassen sind. Diese spalten aber bei der Vernetzungsreaktion bekanntermaßen nicht das Blockierungsmittel Malonsäurediethylester ab, sondern es findet eine Umesterung unter Freisetzung von Ethanol statt. In Anbetracht der nur relativ geringen Fläche einer Kronkorkendichtung in bezug auf die Gesamtoberfläche des Behältnisses und der daher nur sehr geringem Menge in das Nahrungsmittel migrierenden Ethanols kann dieses, insbesondere bei ohnehin alkoholhaltigen Nahrungs- und Genussmitteln, vernachlässigt werden.

Daher ist nie in Betracht gezogen worden, Beschichtungssysteme auf Basis blockierter Polyisocyanate, die im Zuge der Vernetzung das Blockierungsmittel abspalten, zur Beschichtung von in direktem Kontakt mit Nahrungsmitteln stehenden Oberflächen einzusetzen, da von den abgespaltenen Blockierungsmitteln ein potenzielles toxikologisches Risiko ausgehen könnte.

Der vorliegenden Erfindung lag die Aufgabe zugrunde, Beschichtungsmittel zur Innenbeschichtung von vorzugsweise metallischen Nahrungsmittelverpackungen mit dauerhaftern Kontakt zu Nahrungsmitteln bereitzustellen, die diese Nachteile nicht aufweisen.

Diese Aufgabe konnte durch die Verwendung von nachfolgend näher beschriebenen Beschichtungsmitteln bestehend aus
a) mindestens einem im Mittel mindestens zwei NCO-Gruppen pro Molekül enthaltenden Polyisocyanat, bei dem mindestens 95% der NCO-Gruppen mit einem Blockierungsmittel blockiert sind, und
b) mindestens einer im Mittel mindestens zwei mit NCO-Gruppen reaktive Hydroxylgruppen pro Molekül enthaltenden Polyhydroxylverbindung und
c) gegebenenfalls Hilfs- und Zusatzstoffen
zur Innenbeschichtung der überwiegenden Fläche von Behältnissen mit direktem Kontakt zu Nahrungsmitteln gelöst werden, wobei es sich bei Komponente b) um Polyesterpolyole handelt, die aus mindestens einer hydroxylgruppenhaltigen Komponente, ausgewählt aus 1,2-Propandiol, Neopentylglykol und 1,1,1-Trimethylolpropan, und mindestens einer carboxylgruppenhaltigen Komponente, ausgewählt aus Adipinsäure und Maleinsäureanhydrid, aufgebaut sind. Die Beschichtungsmittel werden auf ein ggf. vorbeschichtetes metallisches Substrat aufgebracht und unter erhöhten Temperaturen ausgehärtet.

Weiterhin sind Gegenstand der vorliegenden Erfindung die erfindungsgemäß beschichteten Substrate .

Überraschenderweise enthalten die erfindungsgemäß erhaltenen Schichten entweder keine relevanten Mengen an freien Blockierungsmittel mehr oder diese migriren nicht - wie an sich vermutet - in die verpackten Nahrungsmittel. Jedenfalls werden in diesen keine relevanten Mengen an Blockierungsmitteln und anderen Lackbestandteilen gefunden, selbst dann nicht, wenn die Innenfläche des Behältnisses vollständig mit den erfindungsgemäß verwendeten Beschichtungsmitteln überzogen ist, wie dies beispielsweise bei Getränkedosen der Fall ist. Die erfindungsgemäße Lehre überwindet demnach ein bisher bestandenes Vorurteil.

Die erfindungsgemäßen Beschichtungsmittel sind durch Mischen der Komponenten a) - c) in beliebiger Reihenfolge herzustellen.

Die Herstellung der blockierten Polyisocyanate (a) kann nach den aus dem Stand der Technik bekannten Methoden erfolgen. Diese werden zum Beispiel in Liebigs Annalen, Band 562, Seiten 205 bis 229 aus dem Jahre 1949 beschrieben.

Als zu blockierende Polyisocyanate können dabei vorzugsweise monomerenarme, durch Modifizierung insbesondere aliphatischer, cycloaliphatischer, araliphatischer und/oder aromatischer Diisocyanate hergestellte, aus mindestens zwei Diisocyanaten aufgebaute Polyisocyanate mit vorzugsweise Uretdion-, Isocyanurat-, Urethan-, Allophanat-, Biuret-, Iminooxadiazindionund/oder Oxadiazintrionstruktur, wie sie z.B. aus "Polyurethane für Lacke und Beschichtungen", Seiten 18 bis 35 (M. Bock, Vincentz Verlag, Hannover, 1999) oder J. prakt. Chem. 336 (1994), Seiten 185 bis 200, bekannt sind, oder Gemische dieser Verbindungen eingesetzt werden.

Geeignete Diisocyanate sind insbesondere beliebige, durch Phosgenierung oder nach phosgenfreien Verfahren, beispielsweise durch thermische Urethanspaltung, zugängliche Diisocyanate des Molekulargewichtsbereichs 140 bis 400 g/mol mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan (H12MDI), 1-Isocyanato-3,3,5-trimethyl-5-isocyanatomethylcyclohexan (Isophorondiisocyanat, IPDI), 1-Isocyanato-1-methyl-4(3)isocyanato-methylcyclohexan (IMCI), 4,4'-Diisocyanatodicyclohexylmethan, Bis-(isocyanatomethyl)-norboman, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Bevorzugt handelt es sich bei den Polyisocyanaten um Polyisocyanate oder Polyisocyanatgemische der genannten Art mit ausschließlich aliphatisch und/oder cycloaliphatisch gebundenen Isocyanatgruppen. Besonders bevorzugt sind Polyisocyanate bzw. Polyisocyanatgemische mit Isocyanuratstruktur und/oder Iminooxadiazindion- und/oder Biuretstruktur auf Basis von HDI, IPDI und/oder 4,4'-Diisocyanatodicyclohexylmethan oder Gemische dieser Verbindungen. Ganz besonders bevorzugt werden Polyisocyanate auf Basis von IPDI mit Isocyanuratstruktur eingesetzt.

Um die Gebrauchseigenschaften der erfindungsgemäßen Produkte an das jeweilige Anforderungsprofil anzupassen (Steigerung der Vernetzungsdichte durch Erhöhung der mittleren blockierten NCO-Funktionalität im fertigen Härter, Beeinflussung der Elastizität durch hart/weich machende Komponenten etc.) kann neben der Blockierungsreaktion eine sogenannte Vorverlängerung erfolgen. Hierfür erfolgt eine Zugabe von unterstöchiometrischen Mengen an Alkoholen, Aminen und/oder Aminoalkoholen zu der freie Isocyanatgruppen enthaltenden Polyisocyanatkomponente wobei die o.g. Vorverlängerungsmittel mindestens 2 OH- bzw. NH-Gruppen je Molekül enthalten. Hierfür besonders geeignete Verbindungen sind gegebenenfalls verzweigte, gegebenenfalls cyloaliphatische Segmente enthaltende Diole und Triole die bevorzugt (im Mittel) 2 bis 30 C Atome enthalten und deren C-Kette optional mit funktionellen Gruppen, insbesondere Ether- sowie Estergruppen, unterbrochen sein kann. Besonders bevorzugt werden C₂-C₁₂ Di- und Triole eingesetzt sowie alle Isomeren sowie beliebige Mischungen nachfolgend aufgeführter Verbindungen untereinander: Ethylenglycol, Propandiole, Butandiole, Pentandiole, Hexandiole, Heptandiole, Octandiole, Nonandiole, Decandiole, Trimethylolethan sowie -propan. Anschließend oder simultan wird der nicht infolge o.g. Vorverlängerung "verbrauchte" Teil an NCO-Gruppen durch die Zugabe des eigentlichen Blockierungsmittels umgesetzt.

Geeignete Blockierungsmittel zur Herstellung der Komponente a) sind die aus dem Stand der Technik bekannten, gegenüber NCO-Gruppen reaktiven Verbindungen wie Alkohole, Lactame, Oxime, wie Butanonoxim, Phenole, Hydroxybenzoesäurealkylester, Pyrazole und Triazole, sowie Amine, wie z. B. 1,2,4-Triazol, 3,5-Dimethyl-1,2,4-triazol, 3,5-Dimethylpyrazol, 1H-Imidazol, Pyrazol, Diisopropylamin, Acetonoxim, ε-Caprolactam oder beliebige Gemische dieser Blockierungsmittel. Bevorzugt werden ε-Caprolactam und aliphatische Alkohole mit einem Molgewicht <100 oder Gemische dieser Verbindungen eingesetzt. Ganz besonders bevorzugt wird ε-Caprolactam eingesetzt.

Es ist auch möglich, die Di- oder Polyisocyanate zunächst teilweise mit Blockierungsmitteln umzusetzen und dann Umsetzung zu Polyisocyanaten mit den oben erwähnten Strukturen durchzuführen.

Das Herstellung der blockierten Polyisocyanate (a) kann gegebenenfalls in einem geeigneten, gegenüber Isocyanatgruppen inerten Lösemittel durchgeführt werden. Als Lösemittel geeignet sind beispielsweise die an sich üblichen Lacklösemittel, wie z.B. Ethylacetat, Butylacetat, 1-Methoxypropyl-2-acetat, 3-Methoxy-n-butylacetat, Aceton, 2-Butanon, 4-Methyl-2-pentanon, Cyclohexanon, Toluol, Xylol, N-Methylpyrrolidon, Chlorbenzol. Mischungen, die vor allem höher substituierte Aromaten enthalten, wie sie beispielsweise unter den Bezeichnungen Solvent Naphtha, Solvesso® (Exxon Chemicals, Houston, USA), Cypar® (Shell Chemicals, Eschborn, DE), Cyclo Sol® (Shell Chemicals, Eschborn, DE), Tolu Sol® (Shell Chemicals, Eschborn, DE), Shellsol® (Shell Chemicals, Eschborn, DE) im Handel sind, sind ebenfalls geeignet. Die Zugabe der Lösemittel kann aber auch im Anschluss an die Herstellung der erfindungsgemäßen blockierten Polyisocyanate erfolgen, beispielsweise zur Erniedrigung der Viskosität. In diesem Fall können auch Alkohole, wie beispielsweise Isobutylalkohol verwendet werden, da dann die vorhandenen NCO-Gruppen vollständig mit den isocyanatreaktiven Gruppen der Komponenten (b) und (c) abreagiert sind.

Die als Lackbindemittel (b) verwendeten Verbindungen enthalten im Mittel mindestens zwei mit NCO-Gruppen reaktive Hydroxylgruppen pro Molekül.

Als Polyhydroxylverbindungen werden Polyesterpolyole eingesetzt, die aus mindestens einer hydroxylgruppenhaltigen und einer carboxylgruppenhaltigen Komponente aufgehaut sind.

Als Polyhydroxylverbindungen werden bevorzugt solche mit einem mittleren Molekulargewicht Mn von 500 bis 10000 und einem OH-Gehalt nach DIN 53 240/2 von 0,5 bis 30% eingesetzt.

Die eingesetzten Polyesterpolyole sind aus toxikologisch unbedenklichen Bestandteilen aufgebaut. Dies sind 1,2-Propandiol-, Neopentylglykol, 1,1,1-Trimethylolpropan, Adipinsäure und Maleinsäureanhydrid.

Das Äquivalentverhältnis von blockierten und nicht blockierten NCO-Gruppen zu NCO-reaktiven Gruppen liegt dabei zwischen 0,4 : 1,0 und 1,0 : 1,5, bevorzugt zwischen 0,4 : 1,0 und 0,8 : 1,0 besonders bevorzugt bei 0,5 : 1,0.

Als Hilfs- und Zusatzstoffe (c) können Weichmacher, Verlaufshilfsmittel, Pigmente, Füllstoffe, oder die Vernetzungsreaktion beschleunigende Katalysatoren verwendet werden.

Als Katalysatoren können die in der Polyurethanchemie bekannten Verbindungen eingesetzt werden, die die Reaktion von Isocyanatgruppen mit Hydroxylgruppen beschleunigen. Beispielsweise sind dies Zinn-, Zink-, Zirkonium-, Wismut- und Titanverbindungen. Werden Katalysatoren eingesetzt, so sind nichttoxische Katalysatoren bevorzugt, beispielhaft seien Butylzinn-tris-(2-ethylhexanoat), Zinn-tetra(2-cthylhexanoat), Tetrabutyltitanat und Zinn(II)octoat genannt.

Es können ebenfalls weitere, mit NCO-reaktiven Gruppen reaktive Verbindungen als zusätzliche Vernetzerkomponente eingesetzt werden. Beispielsweise sind dies Aminoplastharze. Als Aminoplastharze sind die in der Lacktechnologie bekannten Kondensationsprodukte von Melamin und Formaldehyd, bzw. Harnstoff und Formaldehyd anzusehen. Geeignet sind alle herkömmlichen, nicht oder mit gesättigten Monoalkoholen mit 1 bis 4 C-Atomen veretherten Melamin-Formaldehyd-Kondensate. Im Falle der Mitverwendung anderer Vernetzerkomponenten muss die Menge an Bindemittel mit NCO-reaktiven Hydroxylgruppen oder die Menge an NCO-Gruppen enthaltenden Bestandteilen entsprechend angepasst werden.

Jede der eingesetzten Komponenten (a) bis (c) kann ggf. in einem organischen Lösemittel oder Wasser gelöst eingesetzt werden. Eine Zugabe von Lösemitteln kann aber auch im Anschluss an das Vermischen der Komponenten (a) bis (c) beispielsweise zur Erniedrigung der Viskosität erfolgen.

Als Lösemittel geeignet sind beispielsweise Wasser oder die an sich üblichen Lacklösemittel wie z.B. Ethylacetat, Butylacetat, 1-Methoxypropyl-2-acetat, 3-Methoxy-n-butylacetat, Aceton, 2-Butanon, 4-Methyl-2-pentanon, Cyclohexanon, Toluol, Xylol, N-Methylpyrrolidon, Chlorbenzol. Mischungen, die vor allem höher substituierte Aromaten enthalten, wie sie beispielsweise unter den Bezeichnungen Solvent Naphtha, Solvesso® (Exxon Chemicals, Houston, USA), Cypar® (Shell Chemicals, Eschborn, DE), Cyclo Sol® (Shell Chemicals, Eschbom, DE), Tolu Sol® (Shell Chemicals, Eschborn, DE), Shellsol® (Shell Chemicals, Eschborn, DE) im Handel sind, sind ebenfalls geeignet.

Bevorzugt werden erfindungsgemäß in organischen Lösemitteln gelöste Beschichtungsmittel auf Basis blockierter Isocyanate eingesetzt. Es ist jedoch auch möglich, wässrige Beschichtungsmittelsysteme oder Pulverlacke entsprechend zu verwenden.

Es ist darauf zu achten, dass im Verlauf der Herstellung erfindungsgemäß einzusetzender Beschichtungssysteme beim Vermischen der Bestandteile (a) bis (c) unterhalb der Temperatur gearbeitet wird, bei der die blockierten NCO-Gruppen mit den übrigen Bestandteilen reagieren können. Bevorzugt findet das Vermischen bei Temperaturen zwischen 15 und 100 °C statt.

Die Applikation der Lacke erfolgt direkt auf das metallische Substrat oder auf bereits vorher auf das Substrat aufgebrachte Lackschichten nach aus dem Stand der Technik bekannten Methoden, beispielsweise durch Spritzen, Tauchen, Fluten oder mit Hilfe von Walzen oder Rakeln.

Es wird soviel des Beschichtungsmittels aufgetragen, dass sich nach dem Abdampfen des ggf. vorhandenen Lösungsmittels und dem Aushärten der Beschichtung eine Trockenfilmschichtdicke für die Innenbeschichtung von 1 bis 50 µm, vorzugsweise 3 bis 20 µm, ganz besonders bevorzugt 8 bis 12 µm ergibt.

Zur Aushärtung der Beschichtungen werden die Substrate nach der Applikation der Lacke auf Temperaturen zwischen 100°C und 400°C, bevorzugt zwischen 180°C und 260°C, ganz besonders bevorzugt zwischen 190°C und 230°Cerhitzt und für 100 Minuten bis 1 Sekunde, vorzugsweise für 30 Minuten bis 15 Sekunden, ganz bevorzugt für 15 Minuten bis 20 Sekunden bei dieser Temperatur gelagert. Das Erhitzen kann diskontinuierlich in Einbrennöfen geschehen oder kontinuierlich in Bandbeschichtungsanlagen, sogenannten Coil-Coating-Anlagen, erfolgen.

Die so beschichteten metallischen Substrate können zur Herstellung der Nahrungsmittelbehälter bzw. während der Verpackung der Nahrungsmittel nachträglich verformt werden.

Als Nahrungs- und Genussmittel werden im Sinne der vorliegenden Erfindung Lebensmittel im weitesten Sinn oder Tiernahrungsmittel verstanden. Dies sind flüssige oder feste, sowie halbfeste Güter, die beispielsweise Wasser, Fette, Alkohol und/oder Eiweiß enthalten. Beispielsweise sind dies Kaffee, Tee oder Extrakte aus Kaffe und Tee, frucht- und/oder kohlensäurehaltige Getränke wie Obst und Gemüsesäfte-, Wein-, Limonaden, Bier, Sekt und Schaumwein, sowie Gemische dieser Getränke sowie Fisch-, Fleisch-, Gemüse oder Obstkonserven, die gegebenenfalls in den beschichteten Behältern gegart bzw. gefroren werden.

Die erhaltenen Beschichtungen sind gegen korrosive Medien beständig, verformbar und unter Sterilisationsbedingungen haftbar auf ggf. vorbeschichteten metallischen Substraten.

### Beispiele 1 bis 3

In den nachfolgenden Beispielen sind, wenn nichts anderes angegeben ist, alle Prozentangaben Gew.-%.

### Ausgangsstoffe:

### Blockiertes Polyisocyanat 1

Zu 391,6 g (1,1 val) eines isocyanuratgruppenhaltigen Lackpolyisocyanates auf der Basis von Isophorondiisocyanat (IPDI) enthaltend 30 Gew.-% Solventnaphtha® 100 wurden 124,3 g (1,1 val) ε-Caprolactam zugegeben, der Ansatz innerhalb 30 min auf 90°C aufgeheizt und weitere 4 h bei 90°C nachgerührt, worauf IR-spektroskopisch keine freien NCO-Gruppen mehr nachweisbar waren. Man erhält nach Verdünnen mit 60 g Solvesso 200S und 120 g Solvesso 150 695,9 g eines klaren farblosen Produktes mit folgenden Kenndaten.

| | |
|---|---|
| Festkörpergehalt | 60% |
| BNCO-Gehalt | 7,0% |
| Viskosität bei 23°C | 4000 m Pas |

### Polyester 1

Hydroxylgruppenhaltiger Polyester, hergestellt nach DE-A 4 100 204 aus 1,2-Propaniol, Neopentylglykol, Trimethylolpropan, Adipinsäure und Maleinäureanhydrid, 75%ig in Solventnaphtha® 100 mit einem nach DIN 53 240/2 bestimmten OH-Gehalt von 2,0%, Viskosität 3800 mPas.

### Formaldehyd / Phenolharz 1:

In einem 51 Rundkolben werden 456 g Isobutanol und 456 g Bisphenol A sowie 292 g 37%ige Formaldehyd-Lösung bei RT vorgelegt. Man heizt die Mischung auf 60°C, gibt 12,56 g Trinatriumphosphat-Dodekahydrat zu und erhitzt innerhalb von 60 Minuten auf 91°C. Nach 6 h Rühren bei dieser Temperatur wird auf 70°C abgekühlt und anschließend mit 12,4 g 85%iger Phosphorsäure auf pH=2 eingestellt. Man trennt die wässrige Phase ab und gibt weitere 3,5 g 85 %ige Phosphorsäure sowie 608 g Isobutanol zu. Danach wird im Vakuum soviel Isobutanol abdestilliert, dass sich ein Festkörpergehalt von 60 Gew.-% ergibt.

Es wurden Klarlacke durch inniges Vermischen folgender Einsatzstoffe bei Raumtemperatur hergestellt, auf 8 cm breite und 9 cm lange Weißblechplatten E1 der Firma Hoesch mit einem Rakel appliziert und für 12 min bei 200 °C im Umluftofen eingebrannt. Es ergab sich eine Trockenfilmschichtdicke von 8 - 12 µm.

| **Beispiele** | **Erfindungsgemäß 1** | **Vergleich 2** | **Vergleich 1** |
|---|---|---|---|
| **Einsatzstoffe** | | | |
| Blockiertes Polyisocyanat 1 | 17,9g | 31,7 g | |
| Formaldehyd/ Phenolharz 1 | | 20,6 g | 13,8 g |
| Polyester 1 | 50,7 | 24,8 g | |
| Epikote® 1007 ^{a} | | | 82,9 g |
| BYK 301 ^{b} | 0,2 g | 0,2 g | |
| Metatin® S 26 ^{c} / Fascat® 4102 ^{d} (Mischung 3:1), 2%ig in Solvesso® 200 S | 2,4 g | | |
| Solvesso® 150 | 28,8g | 22,7 g | |
| Phosphorsäure, 10% in n-Butanol | | | 3,3 g |

| **Lackeigenschaften** | | | |
|---|---|---|---|
| Haftung Gitterschnitt ^{e} | 0 | 0-1 | 0-1 |
| Schlagbiege-prüfung ^{f} | 0 | 36 | 27 |
| Tiefzug Rund-näpfchen ^{e,g,h} | 0 | 0 | 0 |
| Stapelfestigkeit ⁱ | k. Abdruck | k. Abdruck | k. Abdruck |
| MEK-Wischtest (1 Kp Druck) | > 100 x (weich) | > 100 x (hart) | > 100 x (weich) |
| Sterilisation ^{g,k} | k. Veränderung | k. Veränderung | k. eränderung |

| | | | |
|---|---|---|---|
| ^{a} Epoxydharz basierend auf Epichlorhydrin/Bisphenol A, enthält BADGE, ^{b} 52%ige Lösung eines polyethermodifizierten Polydimethyldisiloxans in Butylglykol ^{c} Zinn(II)octoat ^{d} Butylzinn-tris-(2-ethylhexanoat) ^{e} 0= gut, 5= schlecht ^{f} Erichsen Schlagfaltprüfgerät Typ 471, Schlaghammer 2300 g, Fallhöhe 650 mm, Angabe der Risslänge in mm ^{g} Erichsen Tiefzieh-Näpfchen-Prüfmaschine ^{h} Bewertung nach DIN 53230 ⁱ Beschichtete Platten werden mit den lackierten Seiten gegeneinander gestapelt. Zwischen die beschichteten Platten wird ein Schwarzbandfilter gelegt. Der Stapel wird mit einer Stahlplatte zur besseren Gewichtsverteilung und einem 5 kg Gewichtstein belastet und anschließend 16 h (über Nacht) bei 50°C gelagert. Nach Lagerung werden etwaige Beschädigungen des Films (Abdruckspuren des Filterpapiers) abgemustert. ^{k} Sterilisator, Fa. Aesculap, 2h bei 1,2 bar / 121°C, Beschichtung wird untersucht auf Haftungsverlust (Strippen), Glanzverlust, Wasserflecken, Blasenbildung | | | |

Die erfindungsgemäß beschichtete Platte wurde 2h bei 121°C in 120 ml eines Gemisches gleicher Volumina Ethanol und Wasser gelagert. Die Flüssigkeit wurde daraufhin chromatographisch auf freigesetztes Blockierungsmittel untersucht. Es wurde bei einer Nachweisgrenze von 3 µg/l kein freigesetztes Blockierungsmittel gefunden.

Es zeigt sich, dass das erfindungsgemäß verwendete Beschichtungsmittel zu Lackfilmen führen, die den Anforderungen an einen Innenbeschichtung von Dosen mit Nahrungsmittelkontakt genügen und insgesamt bessere Eigenschaften aufweisen als die Beschichtung, die nach dem Stand der Technik hergestellt wurde.

## Patentansprüche

1. Verwendung von Beschichtungsmitteln bestehend aus
a) mindestens einem im Mittel mindestens zwei NCO-Gruppen pro Molekül enthaltenden Polyisocyanat, bei dem mindestens 95% der NCO-Gruppen mit einem Blockierungsmittel blockiert sind, und
b) mindestens einer im Mittel mindestens zwei mit NCO-Gruppen reaktive Hydroxylgruppen pro Molekül enthaltenden Polyhydroxylverbindung und
c) gegebenenfalls Hilfs- und Zusatzstoffen
zur Innenbeschichtung der überwiegenden Fläche von metallischen Behältern und Verpackungen mit direktem Kontakt zu Nahrungs- oder Genussmitteln,
wobei es sich bei Komponente b) um Polyesterpolyole handelt, die aus mindestens einer hydroxylgruppenhaltigen Komponente, ausgewählt aus 1, 2 Propandiol neopentylclycol und 1,1,1-Trimethylolpropan, und mindestens einer carboxylgruppenhaltigen Komponente, ausgewählt aus Adipinsäure und Maleisäureanhydrid, aufgebaut sind.

2. Verwendung nach Anspruch 1, **dadurch gekennzeichnet, dass** als Komponente (a) Isocyanurat- und/oder Iminooxadiazindiongruppen enthaltende Polyisocyanate eingesetzt werden.

3. Verwendung nach Anspruch 1, **dadurch gekennzeichnet, dass** als Komponente (a) Polyisocyanate auf Basis von 1,6-Hexandiisocyanat und/oder Isophorondiisocyanat und/oder 4,4'-Diisocyanatodicyclohexylmethan eingesetzt werden.

4. Verwendung nach Anspruch 1, **dadurch gekennzeichnet, dass** als Komponente (a) Polyisocyanate auf Basis von Isophorondiisocyanat verwendet werden.

5. Verwendung nach Anspruch 1, **dadurch gekennzeichnet, dass** die in der Komponente (a) vorhandenen Isocyanatgruppen mit Lactamen, Oximen, Phenolen, Hydroxybenzoesäurealkylestern, Pyrazolen und/oder sekundären aliphatischen Aminen blockiert sind.

6. Verwendung nach Anspruch 1, **dadurch gekennzeichnet, dass** die in der Komponente (a) vorhandenen Isocyanatgruppen mit ε-Caprolactam blockiert sind.

7. Verwendung nach Anspruch 1, **dadurch gekennzeichnet, dass** die in der Komponente (a) vorhandenen Isocyanatgruppen mit aliphatischen Alkoholen mit einem Molgewicht <100 blockiert sind.

8. Verwendung nach Anspruch 1, **dadurch gekennzeichnet, dass** die in der Komponente (b) vorhandenen Polyhydroxylverbindungen einen Gehalt an OH-Gruppen nach DIN 53 240/2 von 0,5 bis 30 Gew.-% haben.

9. Verwendung nach Anspruch 1, **dadurch gekennzeichnet, dass** die in der Komponente (b) vorhandenen Polyhydroxylverbindungen ein mittleres Molgewicht Mn zwischen 500 und 10000 haben.

10. Verwendung nach Anspruch 1, **dadurch gekennzeichnet, dass** die Beschichtung bei Temperaturen zwischen 100 und 400 Grad ausgehärtet wird.

11. Verwendung nach Anspruch 10, **dadurch gekennzeichnet, dass** die Beschichtung bei Temperaturen zwischen 190 und 230 Grad ausgehärtet wird.

12. Verwendung nach Anspruch 1, **dadurch gekennzeichnet, dass** das Beschichtungsmittel ein organisches Lösungsmittel enthält.

13. Verwendung nach Anspruch 1, **dadurch gekennzeichnet, dass** das Beschichtungsmittel Wasser enthält.

14. Verwendung nach Anspruch 1, **dadurch gekennzeichnet, dass** das Beschichtungsmittel einen Katalysator enthält.

15. Mit einer Innenbeschichtung gemäß eimem der Ansprüche 1-14 beschichtete metallische Nahrungsmittelbehälter und -verpackungen.

## Claims

1. Use of coating compositions consisting of
a) at least one polyisocyanate containing an average of at least two NCO groups per molecule, at least 95% of the NCO groups being blocked with a blocking agent,
b) at least one polyhydroxyl compound containing an average of at least two hydroxyl groups per molecule that react with NCO groups, and
c) optionally auxiliary substances and additives
for coating the inside of the major part of the area of metal containers and packaging that are in direct contact with foods or other consumable products, component b) being polyesterpolyols synthesized from at least one hydroxyl-containing component selected from 1,2-propanediol, neopentyl glycol and 1,1,1-trimethylolpropane, and at least one carboxyl-containing component selected from adipic acid and maleic anhydride.

2. Use according to Claim 1, **characterized in that** polyisocyanates containing isocyanurate and/or iminooxadiazinedione groups are used as component (a).

3. Use according to Claim 1, **characterized in that** polyisocyanates based on 1,6-hexane diisocyanate and/or isophorone diisocyanate and/or 4,4'-diisocyanatodicyclohexylmethane are used as component (a).

4. Use according to Claim 1, **characterized in that** polyisocyanates based on isophorone diisocyanate are used as component (a).

5. Use according to Claim 1, **characterized in that** the isocyanate groups present in component (a) are blocked with lactams, oximes, phenols, alkyl hydroxybenzoates, pyrazoles and/or secondary aliphatic amines.

6. Use according to Claim 1, **characterized in that** the isocyanate groups present in component (a) are blocked with ε-caprolactam.

7. Use according to Claim 1, **characterized in that** the isocyanate groups present in component (a) are blocked with aliphatic alcohols having a molecular weight of <100.

8. Use according to Claim 1, **characterized in that** the polyhydroxyl compounds present in component (b) have a content of OH groups according to DIN 53 240/2 of 0.5 to 30 wt.%.

9. Use according to Claim 1, **characterized in that** the polyhydroxyl compounds present in component (b) have an average molecular weight Mn of between 500 and 10,000.

10. Use according to Claim 1, **characterized in that** the coating is cured at temperatures of between 100 and 400 degrees.

11. Use according to Claim 10, **characterized in that** the coating is cured at temperatures of between 190 and 230 degrees.

12. Use according to Claim 1, **characterized in that** the coating composition contains an organic solvent.

13. Use according to Claim 1, **characterized in that** the coating composition contains water.

14. Use according to Claim 1, **characterized in that** the coating composition contains a catalyst.

15. Metal food containers and packaging coated on the inside with a coating according to one of Claims 1 - 14.

## Revendications

1. Utilisation de revêtements, consistant en
a) au moins un polyisocyanate contenant en moyenne deux groupe NCO par molécule, pour lequel au moins 95 % des groupes NCO sont bloqués par un agent de blocage et
b) au moins un composé hydroxylé contenant par molécule en moyenne au moins deux groupes hydroxyles réactifs avec des groupes NCO et
c) le cas échéant des substances auxiliaires et des additifs,
pour le revêtement de l'essentiel des surfaces de récipients et d'emballages métalliques en contact direct avec des denrées alimentaires ou des stimulants,
sachant qu'il s'agit pour le composant b) de polyesters de polyols, qui sont constitués d'au moins un composant contenant des groupes hydroxyles, choisi parmi le 1,2-propane diol, le néopentylglycol et le 1,1,1-triméthylolpropane, et d'au moins un composant contenant des groupes carboxyles, choisi parmi l'acide adipique et l'anhydride maléique.

2. Utilisation selon la revendication 1, **caractérisée en ce que** comme composant (a) sont utilisés des groupes isocyanurates et/ou des groupes imino-oxadiazine diones.

3. Utilisation selon la revendication 1, **caractérisée en ce que** comme composant (a) sont utilisés des polyisocyanates à base de 1,6-hexane diisocyanate et/ou d'isophorone diisocyanate et/ou de 4,4'-diisocyanatodicyclohexylméthane.

4. Utilisation selon la revendication 1, **caractérisée en ce que** comme composant (a) sont utilisés des polyisocyanates à base d'isophorone diisocyanate.

5. Utilisation selon la revendication 1, **caractérisée en ce que** les groupes isocyanates présents dans le composant (a) sont bloqués par des lactames, des oximes, des phénols, des esters alkyliques de l'acide hydroxybenzoïque, des pyrazoles et/ou des amines aliphatiques secondaires.

6. Utilisation selon la revendication 1, **caractérisée en ce que** les groupes isocyanates présents dans le composant (a) sont bloqués par de l'ε-caprolactame.

7. Utilisation selon la revendication 1, **caractérisée en ce que** les groupes isocyanates présents dans le composant (a) sont bloqués par des alcools aliphatiques avec un poids moléculaire <100.

8. Utilisation selon la revendication 1, **caractérisée en ce que** les composés polyhydroxyles présents dans le composant (b) ont une teneur en groupes OH selon DIN 53 240/2 de 0,5 à 30 % en poids.

9. Utilisation selon la revendication 1, **caractérisée en ce que** les composés polyhydroxyles présents dans le composant (b) ont un poids moléculaire moyen Mn compris entre 500 et 10000.

10. Utilisation selon la revendication 1, **caractérisée en ce que** le revêtement est durci à des températures comprises entre 100 et 400 degrés.

11. Utilisation selon la revendication 10, **caractérisée en ce que** le revêtement est durci à des températures comprises entre 190 et 230 degrés.

12. Utilisation selon la revendication 1, **caractérisée en ce que** le produit de revêtement contient un solvant organique.

13. Utilisation selon la revendication 1, **caractérisée en ce que** le produit de revêtement contient de l'eau.

14. Utilisation selon la revendication 1, **caractérisée en ce que** le produit de revêtement contient un catalyseur.

15. Récipients et emballages pour denrées alimentaires revêtus d'un revêtement intérieur selon l'une quelconque des revendications 1 à 14.
